# EUROPEAN PATENT APPLICATION

(11) **EP 4 821 864 A1**
(43) Date of publication of application: **14.10.2026**
(21) Application number: 25305524.8
(22) Date of filing: 11.04.2025
(51) Int. Cl.: B66B 3/00

(54) **COMPUTER-IMPLEMENTED METHOD FOR PROVIDING CONTROL-DATA TO AT LEAST ONE GUIDANCE ROBOT AND COMPUTER-IMPLEMENTED METHOD FOR CONTROLLING A GUIDANCE ROBOT**

(71) Applicant: Otis Elevator Company, Farmington, Connecticut 06032 (US)
(72) Inventor: BEZAULT, Quentin, 45500 Gien (FR); ROBERTS, Randall, Hebron, Connecticut, 06248 (US); YAMADA, Atsushi, Narita-shi, Chiba, 286-0036 (JP); GAMINI, Naga Venkata Rudramurthy, 500090 Hyderabad, Telangana (IN); MIRIYALA, Pradeep, 500049 Hyderabad, Telangana (IN); PRAKASH, Vikram Jothy, 600095 Chennai, Tamil Nadu (IN); BHASKAR, Kiron, Farmington, Connecticut, 06032 (US)
(74) Representative: Winter, Brandl - Partnerschaft mbB

(57) **Abstract**

The disclosure relates to a computer-implemented method for providing control data (1000) to at least one guidance robot configured for use with a transportation system in a building, comprising: receiving service request data (1100) indicating at least one of a first location and a second location; receiving robot data (1200) indicating a location of the at least one guidance robot; and providing the control data (1300) indicating at least one of a first route guidance for the at least one guidance robot determined based on the service request data and the robot data and a second route guidance for the at least one guidance robot determined based on the service request data. Furthermore, the disclosure relates to a computer-implemented method for controlling a guidance robot (2000), comprising: providing robot data (2100); and controlling the guidance robot (2200) based on received control data indicative of at least one of the first route guidance and the second route guidance.

## Description

### TECHNICAL FIELD

The present disclosure relates to a computer-implemented method for providing control data to at least one guidance robot, a first data processing system, a computer-implemented method for controlling a guidance robot, a second data processing system, a first computer program product, a second computer program product, and a computer-readable storage.

### BACKGROUND ART

Finding and accessing a transportation system in a building, for example, elevators, escalators and/or moving walkway systems, can be difficult for people, in particular people with disabilities. Among other things, locating the transportation systems in a short period of time can be challenging for people. Furthermore, the route to these transportation systems may not be usable for people with disabilities, so they have to find alternative routes themselves, which can cause further problems.

Furthermore, finding and reaching locations within buildings with transportation systems is another difficulty that challenges people and people with disabilities.

### SUMMARY

In the view of the above, it is an object of the present disclosure to provide a technique for providing control data to at least one guidance robot and for controlling a guidance robot.

The problem is at least partially solved or alleviated by the subject matter of the independent claims of the present disclosure, wherein further examples are incorporated in the dependent claims.

According to a first aspect, there is provided a computer-implemented method for providing control data to at least one guidance robot configured for use with a transportation system in a building, comprising:
receiving service request data indicating at least one of a first location and a second location;
receiving robot data indicating a location of the at least one guidance robot; and
providing the control data indicating at least one of a first route guidance for the at least one guidance robot determined based on the service request data and the robot data and a second route guidance for the at least one guidance robot determined based on the service request data.

The guidance robot may be configured for the use in the building and/or the transportation system of the building. The transportation system may comprise, but is not limited to, an elevator, an escalator and/or a moving walkway. Furthermore, the building may comprise the transportation system, in particular the elevator. Moreover, the guidance robot may be configured to be housed or stored in the elevator and/or the building.

For example, the computer-implemented method may further comprise providing a request to the at least one guidance robot causing the guidance robot to provide its robot data.

The service request data may be provided by a computer, which is for example controlled by a user via a graphical user interface. Furthermore, the computer may comprise a personal computer and/or a mobile device. For example, the service request data may be provided by an application for a mobile device like a mobile phone or a tablet.

The first location, the second location and/or the location of the at least one guidance robot may comprise a position in the building and/or the transportation system.

The first route guidance may be determined based on the location of the at least one guidance robot and the first location. The second route guidance may be determined based on the first location and the second location.

In another embodiment, the first route guidance may indicate a route for the at least one guidance robot from the location of the at least one guidance robot to the first location. Additionally or alternatively, the second route guidance may indicate a route for the at least one guidance robot from the first location to the second location.

In another embodiment, the service request data may further indicate at least one customization parameter. Additionally or alternatively, the robot data may further indicate at least one of a state of charge (SoC) of the at least one guidance robot and specifications of the at least one guidance robot that are required to process a task specified in the service request data. Additionally or alternatively, the control data may indicate at least one of a notification for a provider of the service request data and a control request for at least one transportation system on the first route guidance and/or the second route guidance.

The customization parameter may indicate a preference of a provider of the service request data. The preferences may comprise general preference settings, call request preferences and/or interactive call options. For example, the general preference may comprise at least one of settings door timing adjustments for an elevator, walking pace parameter, lighting intensity for a building and/or area of a building, crowding level tolerance of a transportation system and/or area of a building, route preferences, transportation system preferences and tethering distance preferences. For example, the call request preferences may comprise at least one of luggage information, wheelchair information, information of a planned multi-destination trip and group size information for the at least one guidance robot. For example, the call options may comprise at least one of select route preferences, VIP option, estimated time to arrive (ETA) and/or delay trip information, guidance robot selecting information and assignment options.

Furthermore, the customization parameter may be based on profile information that contains preset parameters for the provider of the service request data, e.g. a user of the system. Moreover, the profile information may be based on historical parameters that were detected for previous service requests. In addition, the profile information may be based on a machine learning algorithm, which uses the preset parameters and/or the historical parameters.

The specifications of the at least one guidance robot may comprise one or more devices and/or attachments that enable the guidance robot to perform tasks. For example, these devices and/or attachments may allow the guidance robot to lift, pull and/or push objects. In this context, the objects may be indicated, for example, as a walking frame and/or a wheelchair.

The notification for the provider of the service request data may indicate an arrival duration and/or time of the guidance robot at the first location. For example, the notification can be used to show a user of the application for the mobile device the duration and/or time when the guidance robot will arrive. Alternatively or additionally, the notification for the provider of the service request may indicate an arrival duration and/or time of the guidance robot and the provider of the service request data, i.e. the guided person, at the second location. For example, the notification can be used to show the user of the application for the mobile device the duration and/or time when he will arrive at the second location, i.e. the final destination.

The control request may be configured to control the transportation system, in particular the elevator. For example, an elevator call request can be sent to the at least one elevator in the building. For example, the first route guidance and/or the second route guidance may guide a guidance robot and/or a guided person from a location on one floor of a building to another location on another floor of the building. According to this, the elevator call request can be used in such a way that an elevator is available for use by the guidance robot and/or the person during the first route guidance and/or the second route guidance starting on the one floor. Furthermore, for example, the elevator may be provided in such a way that it is provided at a time when the guidance robot and/or the person reach the elevator door of the elevator on the one floor in order to minimize a waiting time for the elevator.

In another embodiment, the control data may be provided to at least one of a first guidance robot and a second guidance robot, wherein at least first robot data of the first guidance robot and second robot data of the second guidance robot is received. For example, the computer-implemented method is configured to provide the control data to the first guidance robot or the second guidance robot. Moreover, the computer-implemented method is configured to provide the control data to one guidance robot of multiple guidance robots.

In another embodiment, the control data may be provided to the first guidance robot or the second guidance robot based on the received robot data of each of the guidance robots.

For example, the control data may be provided to a guidance robot of the multiple guidance robots that has sufficient SoC to fulfil at least one of the first route guidance and the second route guidance, which is closest in location to the first location and/or that comprises specifications required to process the task.

In addition, the computer-implemented method may determine different route alternatives of the second route guidance and provide them to a provider of the service request data. In this way, the provider can select one of the route alternatives as the second route guidance. Moreover, the computer-implemented method may provide the provider with information about the different alternatives in order to support the decision, wherein, but not limited to, a length of a respective alternative and/or a travel time of a respective alternative is provided.

According to another embodiment, the computer-implemented method may comprise, after providing the control data, receiving new service request data indicating at least one of a new first location and a new second location from the provider of the service request data. That is, the provider of the service request changes the first location and/or the second location and then sends the new service request data. Additionally or alternatively, further parameters of the service request data, e.g. the customization parameter, may be changed. Afterwards, the robot data of at least the guidance robot, which was provided with the control data, is received. In case the guidance robot previously provided with the control data is still suitable, e.g. has enough SoC and/or the specifications required to perform the service request, new control data is provided to the same guidance robot. Otherwise, the robot data of other guidance robots is received and the new control data is provided to at least one guidance robot suitable to perform the service request. In the latter case, the computer-implemented method may comprise providing control data indicating a stay signal to the guidance robot that is no longer suitable to perform the service request. For example, the stay signal may cause the guidance robot to stay with the guided person, i.e. the provider of the service request, during the second route guidance.

In another embodiment, the computer-implemented method may receive navigability data indicative of the navigability of paths in the building. For example, the navigability data may comprise structural features of the building and/or the presence of people who may impede a passage. For example, the navigability data may be received from a computer system of the building, e.g. a building management system. Accordingly, the first route guidance and/or the second route guidance, i.e. the control data, may be determined based on the navigability data.

According to a further embodiment, the computer-implemented method may comprise receiving emergency request data. The emergency request data may be assigned with the highest priority, i.e. a higher priority than the service request data. The emergency request data may be provided by a computer system of the building of the building, e.g. a building management system. The computer-implemented method may bi-directionally exchange data with the computer system of the building. Upon receipt of the emergency data, the computer-implemented method may generate control data comprising at least one of a first route guidance and a second route guidance. For example, the control data may indicate a first route guidance causing the guidance robot to move to a nearest person requiring assistance of the guidance robot and/or a second route guidance guiding the person requiring the assistance of the guidance robot or an already guided person to an emergency meeting point inside or outside the building. Since the emergency data have the highest priory, control data previously provided in response to receipt of service request data are overwritten.

According to a further aspect, there is provided a first data processing system, comprising means for carrying out the steps of the disclosed computer-implemented method for providing control data to at least one guidance robot and means for data transmitting and/or receiving. In particular, the means for data transmitting and/or receiving may be configured to transmit and/or receive data to/from a second data processing system, which is described below.

The first data processing system may be configured to exchange data with the computer, in particular with the mobile device.

According to a further aspect, there is provided a computer-implemented method for controlling a guidance robot, comprising:
providing robot data indicating at least one of a location of the guidance robot, a state of charge (SoC) of the guidance robot and specifications of the guidance robot that are required to process a task; and
controlling the guidance robot based on received control data provided by the computer-implemented method for providing control data indicative of at least one of the first route guidance and the second route guidance.

In another embodiment, the method may further comprise detecting surrounding-data indicative of at least one of a presence of objects surrounding the guidance robot and a distance between objects surrounding the guidance robot and the guidance robot.

In another embodiment, the guidance robot may be configured to guide a person. Additionally or alternatively, the controlling may be based on the surrounding-data.

In another embodiment, the guidance robot may be tethered to the person by means of the control data and perform the second route guidance at a predefined distance away from the person. The predefined distance may be specified in by the customization parameter.

The guidance robot may comprise systems for tethering with the person. For example, the guidance robot may comprise a sensor system and/or system for coupling the person, in particular, a wheelchair of the person. For example, the sensor system may comprise sensors to measure the distance to the person like lidar, radar and/or camera sensors. Additionally or alternatively, the guidance robot may use near field communication (NFC) to connect with for example the mobile device of the person to measure the distance.

For example, the guidance robot may perform the second route guidance while maintaining the predefined distance from the person. Furthermore, the predefined distance may be predetermined by the control data, in particular by the customization parameter, and/or predetermined by the person. Further, the predefined distance may be amended during the guidance, for example by the person. The predefined distance may be specified by the customization parameter.

In another embodiment, the control data may further indicate a stay signal that controls the guidance robot to stay at its actual location until another guidance robot arrives.

For example, the stay signal may be used to ensure that a first guidance robot, which has to be replaced, stays with a guided person until a second guidance robot reaches the guided person, so that there is always a guidance robot with the guided person.

According to a further aspect, there is provided a second data processing system, comprising means for carrying out the steps of the disclosed computer-implemented method for controlling a guidance robot and means for transmitting and/or receiving data. In particular, the means for data transmitting and/or receiving may be configured to transmit and/or receive data to/from a first data processing system, which is described above.

The second data processing system may be configured to be used in a guidance robot, in particular the first guidance robot and/or the second guidance robot. Furthermore, the second data processing system may be configured to exchange data with the first data processing system.

According to a further aspect, there is provided a first computer program product comprising instructions that, when the program is executed by a data processing system, in particular a computer system, comprising means for data transmitting and/or receiving, cause the data processing system to carry out the disclosed computer-implemented method for providing control data to at least one guidance robot.

According to a further aspect, there is provided a second computer program product comprising instructions that, when the program is executed by a data processing system, in particular a computer system, comprising means for data transmitting and/or receiving, cause the data processing system to carry out the disclosed computer-implemented method for controlling a guidance robot.

According to a further aspect, there is provided a computer-readable storage having stored thereon the first computer program product and/or the second computer program product.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- **Fig. 1**: shows a schematic illustration of an elevator system that may employ various embodiments of the present disclosure;
- **Fig. 2**: shows an example of a diagram of the disclosed computer-implemented method for providing control data;
- **Fig. 3**: shows an example of a diagram of the disclosed computer-implemented method for controlling a guidance robot;
- **Fig. 4**: shows a schematic illustration of a building system having a robot, controller, and elevator system in accordance with an embodiment of the present disclosure;
- **Fig. 5**: shows an example of a diagram of an interaction between the computer-implemented method for providing control data and the computer-implemented method for controlling a guidance robot; and
- **Fig. 6**: shows an example of a first data processing system and a second data processing system.

### DETAILED DESCRIPTION

Notably, the figures are merely schematic representations and serve only to illustrate examples of the present disclosure. Identical or equivalent elements are in principle provided with the same reference signs.

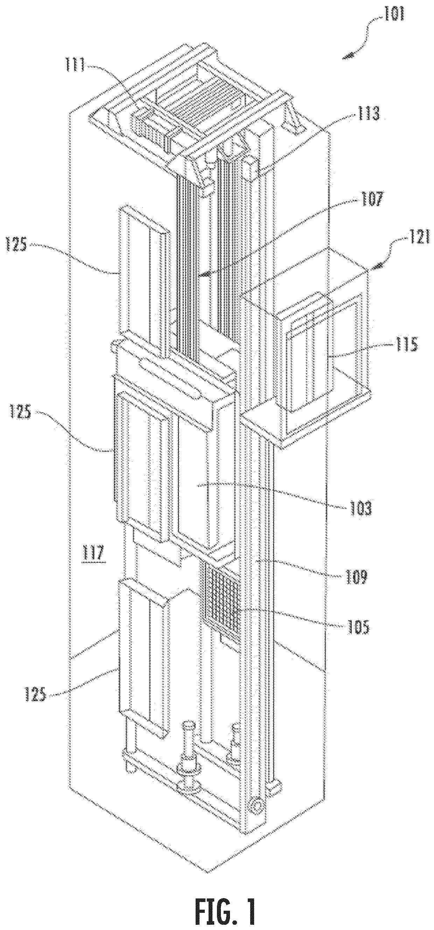

Fig. 1 is a perspective view of an elevator system 101 including an elevator car 103, a counterweight 105, a tension member 107, a guide rail 109, a machine 111, a position reference system 113, and an elevator controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The elevator controller 115 is located, as shown, in a controller room 121 of the elevator shaft 117 and is configured to control the operation of the elevator system 101, and particularly the elevator car 103. For example, the elevator controller 115 may provide drive signals to the machine 111 to control the acceleration, deceleration, leveling, stopping, etc. of the elevator car 103. The elevator controller 115 may also be configured to receive position signals from the position reference system 113 or any other desired position reference device. When moving up or down within the elevator shaft 117 along guide rail 109, the elevator car 103 may stop at one or more landings 125 as controlled by the elevator controller 115. Although shown in a controller room 121, those of skill in the art will appreciate that the elevator controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Fig. 1 is merely a non-limiting example presented for illustrative and explanatory purposes.

Autonomous guidance robots, mobile robots or service robots may be used in commercial buildings. Such uses may be related to hospitality (e.g., for guidance tasks, food and package delivery, concierge and guest services, and the like), healthcare (e.g., for medicine and supply delivery and service augmentation), and the like. Additionally, robots and other autonomous systems (e.g., drones or the like) may be used for inspection, safety, and/or service purposes. Robots may be used with elevator systems of buildings for the purpose of inspection, repair, maintenance, monitoring, and the like.

For example, robots can be used for the purpose of verification of certain elevator system issues. In some such configurations, the robot(s) may be configured to operate as part of a technical partnership between the robot(s) and an IoT (internet-of-things) monitoring system associated with an elevator system. In some such applications, the loT monitoring system may be configured to detect an anomaly of the elevator system that may be an early indicator of an issue with elevator equipment and/or operation. In response to such detection, a robot may be used (e.g., dispatched) to inspect and/or verify the anomaly and/or the nature of such anomaly. The robot may be configured to place hall or car calls via an elevator dispatch application programming interface (API), in response to the anomaly detection. The robot may call an elevator car through direct interface or communication with the elevator dispatch API and may not need to directly (physically) interact with the elevator system (such as pressing a hall call button). The robot may then travel to a position such that the robot can perform a verification or data gathering task. That is, the robot may communicate and/or interact with the elevator system to call an elevator car and travel in such elevator car to a designated location to perform an inspection or other task. In some embodiments, alternatively or in combination, the controller may be configured to place hall or elevator car calls on behalf of the robot.

In some applications, the robot(s) may be configured to place hall or car calls as part of a routine task cycle for gathering data on certain equipment health indicators. In some such applications, the robot(s) may be configured to analyze vibrations of an elevator door via an on-board camera or other sensor of the robot. In such gathering data applications, the robot(s) may be configured to perform a series of monitoring activities (e.g., visual, vibration, etc.) associated with the elevator system. This process can help determine whether an action is needed to resolve an issue. For example, a robot may be configured to trigger a notification or directly place a service request via the elevator loT monitoring system, through a work order management system of a building, or the like. The robot may also be configured to collect data associated with an inspection and service request to provide additional information beyond a mere call for service to be performed.

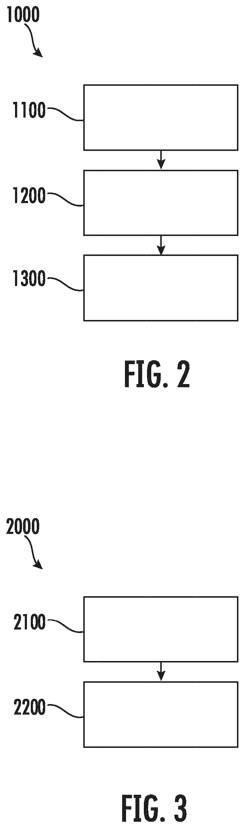

Fig. 2 shows an example of a diagram of the disclosed computer-implemented method 100 for providing control data to at least one guidance robot, configured for use with a transportation system in a building.

The computer-implemented method 1000 comprises receiving of service request data 1100 indicating at least one of a first location and a second location. Furthermore, the computer-implemented method 1000 comprises receiving of robot data 1200 indicating a location of the at least one guidance robot. Further, the computer-implemented method 1000 comprises providing of the control data 1300 indicating at least one of a first route guidance for the at least one guidance robot determined based on the service request data and the robot data and a second route guidance for the at least one guidance robot determined based on the service request data.

Furthermore, the first route guidance may be indicating a route for the at least one guidance robot from the location of the at least one guidance robot to the first location. Additionally or alternatively, the second guidance may be indicating a route for the at least one guidance robot from the first location to the second location.

In a preferred embodiment, the robot data may further indicate a state of charge (SoC) of the at least one guidance robot. Additionally or alternatively, the control data may further indicate at least one of a notification for a provider of the service request data and a control request for at least one elevator on the first route guidance and/or the second route guidance.

In another preferred embodiment, the control data is provided to the first guidance robot or the second guidance robot based on the received robot data of each of the guidance robots.

Fig. 3 shows an example of a diagram of the disclosed computer-implemented method 200 for controlling a guidance robot, configured for use with at least one of an elevator, an escalator and a moving walkway system.

The computer-implemented method 2000 comprises providing of robot data 2100 of the guidance robot and controlling 2200 the guidance robot based on received control data provided by the computer-implemented method 1000 for providing control data and indicative of at least one of the first route guidance and the second route guidance.

Furthermore, the robot data is provided to the computer-implemented method 1000 for providing control data.

In a preferred embodiment, the method further comprises detecting surrounding-data indicative of at least one of a presence of objects surrounding the guidance robot and a distance between objects surrounding the guidance robot and the guidance robot.

In another preferred embodiment, the guidance robot may be configured to guide a person. The controlling may be based on the surrounding-data.

In another preferred embodiment, the guidance robot is tethered to the person by means of the control data and performs at least one of the first route guidance and the second route guidance at a predefined distance away from the person.

In another preferred embodiment, the control data may further indicate a stay signal that controls the guidance robot to stay at its actual location until another guidance robot arrives.

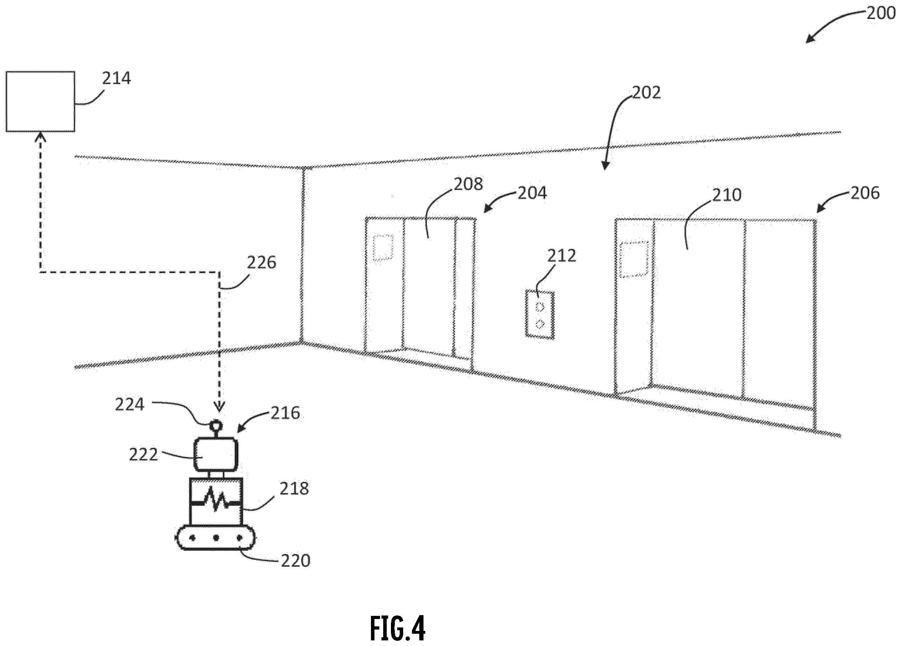

Fig. 4 is a schematic illustration of a building system 200 comprising an elevator system 202. Fig. 4 illustrates further one landing of the elevator system 202 of the building system 200, having two elevators 204, 206 with respective elevator landing doors 208, 210. The elevator system 202 may include a plurality of landings with one or more elevator shafts and associated elevators configured to provide access to and transportation between the landings of the elevator system. The elevators 204, 206 may each be arranged similar to the elevator system 101 shown and described with respect to Fig. 1. The elevators 204, 206 may be called to each landing of the elevator system 202 using a hall call panel 212 located at each landing. When an elevator car of the respective elevator 204, 206 reaches a landing where a request was made (e.g., either at the landing or from within the elevator car), the respective elevator landing door 208, 210 will open to permit entry and exiting to and from the elevator car, as will be appreciated by those of skill in the art.

The building system 200 also includes a controller 214. The controller 214 may be part of control system of the building or a building-integrated system that is configured to monitor and/or control various aspects of a building, including, but not limited to, the elevator system 202 (e.g., a building management system). In some configurations, the controller 214 may be operably connected to or part of a building monitoring system and/or an internet-of-things (IoT) system that incorporates a network and associated communication lines (e.g., wired and/or wireless) for obtaining information from a distributed set of sources (e.g., sensors, monitoring systems, control systems, HVAC systems, elevator systems, security systems, lighting systems, etc.). In accordance with this illustrative embodiment, the building system 200 also includes at least one guidance robot 216. The guidance robot 216 may be an autonomous or semi-autonomous system that is configured to travel throughout the building and perform tasks, such as inspection, monitoring, data collection, perform maintenance, etc. In accordance with some embodiments, the controller 214 may be located onsite and within or part of the same building as the guidance robot 216. In other embodiments, the controller 214 may be part of a datacenter or the like that is offsite or remote from the building having the guidance robot 216. In still further embodiments, the controller 214 may be a cloud-based solution that is distributed in one or more locations. Further still, in some embodiments, the controller 214 may be part of or implemented on a mobile or portable device or the like. Furthermore, the controller 214 may be configured to perform the computer-implemented method 100 for providing control data to at least one guidance robot shown and described with respect to Fig. 2.

The guidance robot 216 includes a main body 218 that houses various electronics and/or mechanism systems, such as for locomotion, data collection, interaction with external items, and the like. The guidance robot 216 includes a means for locomotion 220, such as treads, wheels, roller balls, articulated legs/arms, or the like. The guidance robot 216 includes a sensor assembly 222, which can include various sensors, appendages, tools, processing components, and the like. The guidance robot 216 includes a communications element 224 that is configured to communicate with the controller 214 along a communication line 226. It will be appreciated that the guidance robot 216 is merely schematically shown as a cartoon representation with discrete parts and that the guidance robots of the present disclosure may take any structural form or arrangement of components (e.g., all or some integrated into a single housing or the like). The communication line 226 may be a wireless communication connection and/or the guidance robot 216 may be configured to hardwire connect to a communication port or line to enable communication between the guidance robot 216 and the controller 214. In some embodiments, the controller 214 may be housed within and part of the guidance robot 216 (e.g., onboard), in such configurations, the processes and operations described herein may be performed onboard the guidance robot, reducing the amount of communication. For this purpose, the guidance robot may comprise a robot controlling unit (not shown) for communication with the control unit 214, which is further configured to perform the computer-implemented method 200 for controlling a guidance robot shown and described in Fig. 3.

The guidance robot 216 and/or the controller 214 can include electronics that include processor(s), memory, communication module(s), etc. as will be appreciated by those of skill in the art. The guidance robot 216 can be configured to communicate with one or more system components, such as computers, controllers, etc. of the controller 214. The system components can include processors, memory, communications modules, etc. As noted, the communication between the guidance robot 216 and the controller 214 can be by wired or wireless communication, through the internet, direct connection, etc. as will be appreciated by those of skill in the art.

The guidance robot 216 and the controller 214, in accordance with embodiments of the present disclosure, can communicate with one another along the communication line 226. For example, in some configurations, the two components (i.e., the guidance robot 216 and the controller 214) may communicate with one another when the guidance robot 216 is located in proximity to an access or connection point (e.g., wireless access point or wired port) and/or through network communication. Wireless communication networks can include, but are not limited to, Wi-Fi, short-range radio (e.g., Bluetooth^{®}), Zigbee, ZWave, near-field infrared, cellular network, etc. In some embodiments, the controller 214 may include, or be associated with (e.g., communicatively coupled to) one or more networked system elements, such as computers, routers, network nodes, etc. The networked system elements may also communicate directly or indirectly with the guidance robot 216 using one or more communication protocols or standards (e.g., through the communication line 226).

For example, the controller 214 or a component thereof can communicate with the guidance robot 216 using near-field communications (NFC) (e.g., communication line 226) and thus enable communication between the guidance robot 216 and the controller 214. Such technologies that allow communication can provide users and the system(s) described herein time to perform the described functions. In example embodiments, the guidance robot 216 may communicate with the controller 214 over multiple independent wired and/or wireless networks. Embodiments are intended to cover a wide variety of types of communication between the guidance robot 216 and the controller 214, and embodiments are not limited to the examples provided in this disclosure.

The communication line 226 may be a communication network. Such network may be any type of known communication network including, but not limited to, wide area networks (WAN), local area networks (LAN), global networks (e.g., Internet), virtual private networks (VPN), cloud networks, cellular networks, intranet, etc. Such network may be implemented using a wireless network or any kind of physical network implementation known in the art. The guidance robot 216 and potentially other robots and/or other devices may be coupled to the controller 214 through one or more networks (e.g., a combination of cellular and Internet connections) so that not all communication connections may be the same (or used at the same time). In one non-limiting embodiment, the network (e.g., communication line 226) is the Internet and one or more of the guidance robots 216 are configured to communicate with the controller 214 through the network (e.g., using communications element 224).

The controller 214 may include a control component (e.g., single computer or server, distributed computing system, remote networked system, etc.) that is configured to receive requests for verification and/or inspection. The requests may be received from the guidance robot 216 or from other sources, such as personnel submitted requests (e.g., maintenance), passenger or patron submitted requests (e.g., users of the elevator system 202), or from other sources. The controller 214 may also include a memory or other digital storage (local or remote from the building) that contains a database having one or more verification procedures (e.g., a sequence of tasks). The communication line 226 provides for a communication channel between the controller 214 and the guidance robot 216.

As noted, the controller 214 may include or be configured to access a database containing one or more verification procedures. The verification procedures may be a series of executable commands or sequences of tasks to be performed by the controller and/or the guidance robot. For example, in some embodiments, the verification procedures can include data analysis at the controller or the guidance robot. Further, such verification procedures may include instructions to be transmitted to the guidance robot to be carried out or performed by the guidance robot. Such instructions can include location data (e.g., where the guidance robot should go) and task data (e.g., executable instructions to perform an action). As such, the guidance robot may travel and perform a task in response to receiving one or more instructions that may be part of a verification procedure. The tasks may include data collection using one or more sensors of the guidance robot and/or the guidance robot interfacing with other systems to download or obtain data and information from such other systems.

In operation, the guidance robot 216 may be configured to collect sensor data using the sensor assembly 222. The guidance robot 216 may alternatively or additionally be configured to obtain sensor data from other sensors or sources remote from the guidance robot 216. For example, through a wired or wireless connection, the guidance robot 216 may be configured to obtain sensor date from a counter or gage on the elevator and/or in a machine room, to obtain information regarding operation of the elevator or the like. In some configurations, the guidance robot 216 may be configured to interface with a computer system, monitoring system, sensing system, or the like, associated with the elevator (e.g., in-cab monitoring system that collects data regarding operation of the elevator car), or the like. As such, the sensor data is not limited to only data collected by sensors of the guidance robot 216, but include both directly obtained sensed information (e.g., using sensor assembly 222) or obtained indirectly from other systems associated with the elevator system. The guidance robot 216 may thus be configured to transmit or otherwise communicate information from the guidance robot 216 to a central location for processing of such information. The controller 214 may also be operably connected to and/or in communication with the elevator system 202 (e.g., an elevator controller). From this connection, the controller 214 may be configured to obtain information directly associated with the elevator system 202 (e.g., sensors on elevator cars, elevator motor or machine, etc.). The controller 214 may be configured to obtain the collected information from the guidance robot 216 (e.g., sensor data) and the elevator system 202 (e.g., elevator data) to determine if elevator operation is nominal or requires further action.

The sensor assembly 222 of the guidance robot 216 may include one or more sensors that are configured to enable detection and/or monitoring of systems and components associated with the elevator system 202. For example, the sensor assembly 222 may include, without limitation, optical sensors, infrared sensors, ultraviolet light sensors, chemical sensors and/or biological sensors (e.g., to detect oil, chemicals, or the like), accelerometers, acoustic and/or vibration sensors, temperature sensor, air quality sensors, air pressure sensors, air flow speed sensors, motor current/feedback sensors, ultrasonic sensors, radar sensors, magnetic sensors, electromagnetic sensors, and the like. Optical sensors and the like may be configured to detect lighting associated with the elevator system 202 (e.g., in-car lights, lights on operating panels, lights at landings, etc.). Such optical sensors may also be configured video analytics, such as a video for damage analysis, identifying debris, spills, a passed out passenger, left behind items, or the like. Accelerometers and similar sensors may be used to detect a level of an elevator car with a landing (e.g., for entering/exiting), smoothness of elevator ride, detecting stopping/starting acceleration of an elevator car, or the like. Air quality sensors may be configured to monitor temperature, odors, ventilation (e.g., CO2), smoke, the presence of chemical and/or biological agents, and the like. Ultrasonic or radar (e.g., range detection) may be used to determine if the elevator car is level with a landing or not and/or may be used to detect objects left behind in elevator car or at a landing. The above description provides a limited number of examples of types of sensors and use thereof. It will be appreciated that additional sensors and/or functionality may be implemented without departing from the scope of the present disclosure.

The guidance robot 216 may be configured or programmed to travel through a building and perform inspections and/or tasks. Through the communication line 226, the guidance robot 216 may be configured to call an elevator car to a particular landing. The call may be placed from the guidance robot 216 to the controller 214 which in turn interfaces with an elevator controller to send an elevator car to a requested landing. In other embodiments, the guidance robot 216 may directly make an elevator call through the communication line 226 if such communication line is connected directly to the elevator controller. In still other embodiments, in combination or alternatively, the guidance robot 216 may request an elevator car using the hall call panel 212 or a car operating panel (if the guidance robot is already within an elevator car and a destination landing is selected).

Although Fig. 4 illustrates a single guidance robot 216, this is merely for schematic and illustrative purposes. It will be appreciated that references to "guidance robot 216" may refer to a single guidance robot or may refer to multiple guidance robots that are associated with an elevator system or building or the like. As such, the term "guidance robot" as used herein is not limited to a singular guidance robot, but rather refers to the functions and capabilities of one or more guidance robots. In some such configuration with multiple guidance robots, each guidance robot may be the same or substantially similar, and thus may perform the same or similar tasks. In other embodiments, some or all of the guidance robots may be different from each other guidance robot, where specialize tasks or functions may be performed by specific unique guidance robots. In some embodiments, such as when the controller (e.g., controller 214) is integrated into the guidance robot, the processing and decision making may be distributed across the group of guidance robots. Alternatively, in a group of guidance robots with an onboard controller, in some embodiments, a primary or control guidance robot may be used, and other guidance robots are controlled or directed through the control guidance robot.

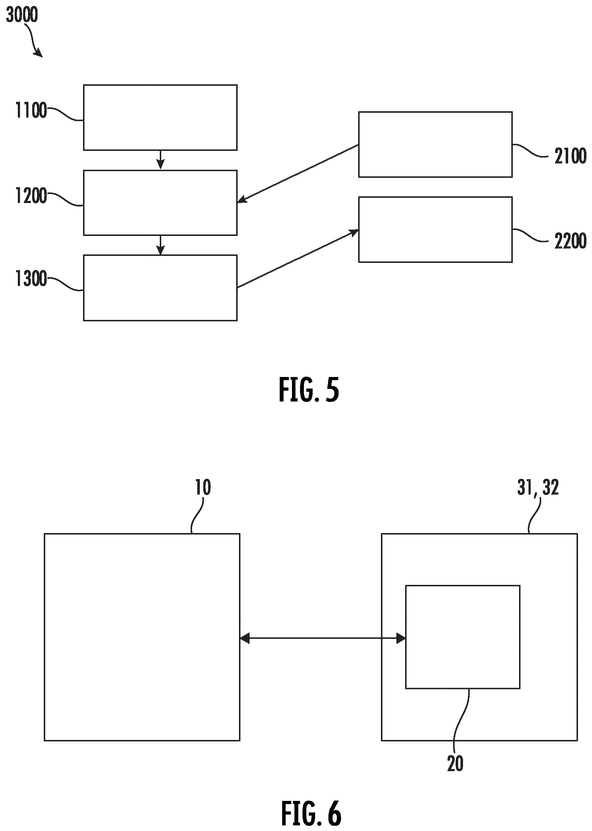

Fig. 5 shows an example of a diagram of an interaction 3000 between the computer-implemented method 1000 for providing control data according to Fig. 2 and the computer-implemented method 2000 for controlling a guidance robot according to Fig. 3.

The interaction 3000 comprises receiving of service request data 1100 indicating at least one of a first location and a second location. Furthermore, the interaction 3000 comprises providing of robot data 2100 of a guidance robot and receiving the robot data 1200 indicating a location of the guidance robot.

Furthermore, the interaction 3000 comprises providing of the control data 1300 indicating at least one of a first route guidance for the guidance robot determined based on the service request data and the robot data and a second route guidance for the guidance robot determined based on the service request data.

Further, the interaction 3000 comprises a controlling 2200 of the guidance robot based on received control data indicative of at least one of the first route guidance and the second route guidance.

Fig. 6 shows an example of a first data processing system 10 and a second data processing system 20.

The first data processing system 10 comprises means for carrying out the steps of the computer-implemented method 1000 for providing control data to at least one guidance robot according to Fig. 2 and means for data transmitting and/or receiving. In particular, the means for data transmitting and/or receiving of the first data processing system 10 are configured for transmitting/receiving data to/from the second processing system 20.

The second data processing system 20 comprises means for carrying out the steps of the computer-implemented method 2000 for controlling a guidance robot according to Fig. 3 and means for transmitting and/or receiving data. In particular, the means for data transmitting and/or receiving of the second data processing system 20 are configured for transmitting/receiving data to/from the first processing system 10.

Furthermore, a first computer program product comprises instructions that, when the program is executed by the first data processing system 10, cause the first data processing system 10 to carry out the computer-implemented method 1000 for providing control data to at least one guidance robot according to Fig. 2.

Further, a second computer program product comprises instructions that, when the program is executed by the second data processing system 20, cause the second data processing system 20 to carry out the computer-implemented method 2000 for controlling a guidance robot according to Fig. 3.

In addition, a computer-readable storage has stored thereon the first computer program product and/or the second computer program product.

A first example of an application of the present disclosure comprises a request for a guidance robot of a person by using a mobile device. In this case, the person, for example, uses a mobile device application and/or a web service on the mobile device in order to generate the request. The request comprises, for example, the pick-up of a person at a first location and the guidance of the person to a second location.

Thereby, service request data of the request is received by a first data processing system configured to execute the computer-implemented method for providing control data to at least one guidance robot. Further, the data processing system receives robot data of for example 10 guidance robots in the building, wherein each robot data comprises a location of the respective guidance robot and a SoC of the respective guidance robot.

Based on the request data and the robot data of the 10 guidance robots, the computer-implemented method for providing control data determines the control data, which comprises a first route guidance from a location of the respective robot to the first location and a second route guidance from the first location to the second location. Furthermore, the control data is provided to a first guidance robot of the 10 guidance robots that is closest to the first location and comprises a sufficient SoC for executing the first route guidance and the second route guidance.

Thereby, the control data is received by a second data processing system configured to execute a computer-implemented method for controlling a guidance robot, wherein the second data processing system is part of a guidance robot, in this case, of the first guidance robot. This causes the first guidance robot to move to the person and guide the person to the second location.

Furthermore, the distance between the first guidance robot and the person when guiding may either be predetermined, e.g. in the customization parameter, set by the person upon request, or set by the person during guidance.

A second example of an application of the present disclosure is based at least on parts of the first example, wherein the person, during the first route guidance or the second route guidance, is creating a new service request via the mobile application.

In this case, the computer-implemented method for providing control data is repeated and a suitable guidance robot is determined. If the first guidance robot is still suitable, new control data is provided to the first guidance robot. If the first guidance robot is no longer suitable, for example, due to a SoC that is too low, the new control data is provided to a second guidance robot. When this happens, the first guidance robot stays with the person until the second guidance robot arrives.

A third example of an application of the present disclosure is based at least on parts of the first and second example, wherein the computer-implemented method for providing control data to at least one guidance robot receives navigability data indicative of the navigability of paths in the building. Thereby, the navigability data may, for example, comprise structural features of the building and/or the presence of people who may impede a passage. Accordingly, the first route guidance and/or the second route guidance is determined based on the navigability data.

A fourth example of an application of the present disclosure is based at least on parts of the first, second and third example, wherein the computer-implemented method for providing control data to at least one guidance robot provides control requests for the transportation system, in particular an elevator, on the first route guidance and/or the second route guidance, wherein these control requests are provided in such a way, that the first guidance robot and/or the guided person reach the elevator and it will open its doors.

A fifth example of an application of the present disclosure is based at least on parts of the first, second, third, fourth and fifth example, wherein the computer-implemented method for controlling a guidance robot is configured to tether the first guidance robot to the person. Thereby, the tethering may be performed in a physical manner by physically connecting the first guidance robot to, for example, a wheelchair of the person or in an non-physical manner by using a sensor system of the first guidance robot to detect the distance between the first guidance robot and the person.

A sixth example of an application of the present disclosure is based at least on parts of the first, second, third, fourth and fifth example, wherein the computer-implemented method for providing control data to at least one guidance robot is configured to receive emergency request data, which have the highest priority and, for example, end every service request in order to determine new control data.

Thereby, the newly determined control data may comprise rescue tasks for the guidance robots, for example, to guide persons out of the building and/or guide the emergency forces to an incident scene. Therefore, the computer-implemented method maybe configured to receive and/or provide data from and/or to a computer system of a building that is configured to process emergency data of the building, for example, a building management system. Furthermore, the computer-implemented method maybe configured to optimize the rescue tasks based on at least the emergency data.

A seventh example of an application of the present disclosure is based on parts of the first, second, third, fourth and fifth and sixth example, wherein a person of a group provides the service request data and the service request data comprises data of an amount of people of the group.

Thereby, the computer-implemented method for controlling a guidance robot is configured to tether the first guidance robot to each of the persons of the group in order to guide every person of the group. In other words, the first guidance robot, for example, may perform a function as a sheep dog.

Other variations to the disclosed examples may be understood and executed by those skilled in the art in practicing the claimed subject matter, from the study of the figures, the disclosure, and the appended claims. In particular, respective parts/functions of the respective example described above may also be combined with each other. In particular, the present disclosure is not limited to specific modules, user interfaces, user interface areas/fields and/or communication methods. In the claims, the word "comprising" does not exclude other elements or steps and the indefinite article "a" or "an" does not exclude a plurality. The mere fact that certain measures are recited in mutually different dependent claims does not indicate that a combination of these measures may not be used to advantage. Any reference signs in the claims should not be construed as limiting the scope of the claims.

### LIST OF REFERENCE SIGNS

- 101: elevator system
- 103: elevator car
- 105: counterweight
- 107: tension member
- 109: guide rail
- 111: machine
- 113: position reference system
- 115: elevator controller
- 117: elevator shaft
- 121: controller room
- 200: building system
- 202: elevator system
- 204: elevator
- 206: elevator
- 208: elevator landing door
- 210: elevator landing door
- 212: call panel
- 214: controller
- 216: guidance robot
- 218: main body
- 220: locomotion
- 222: sensor assembly
- 224: communications element
- 226: communication line
- 10: first data processing system
- 20: second data processing system
- 31: first guidance robot
- 32: second guidance robot
- 1000: computer-implemented method for providing control data
- 1100: receiving service request data
- 1200: receiving robot data
- 1300: providing the control data
- 2000: computer-implemented method for controlling a guidance robot
- 2100: providing robot data
- 2200: controlling the guidance robot
- 3000: diagram of an interaction

## Claims

1. A computer-implemented method (1000) for providing control data to at least one guidance robot (31, 32) configured for use with a transportation system in a building, comprising:
receiving service request data (1100) indicating at least one of a first location and a second location;
receiving robot data (1200) indicating a location of the at least one guidance robot (31, 32, 216); and
providing control data (1300) indicating at least one of a first route guidance for the at least one guidance robot (31, 32, 216) determined based on the service request data and the robot data and a second route guidance for the at least one guidance robot (31, 32, 216) determined based on the service request data.

2. The computer-implemented method (1000) according to claim 1, wherein
the first route guidance is indicating a route for the at least one guidance robot (31, 32, 216) from the location of the at least one guidance robot (31, 32, 216) to the first location; and/or
the second guidance is indicating a route for the at least one guidance robot (31, 32, 216) from the first location to the second location.

3. The computer-implemented method (1000) according to claim 1 or 2, wherein
the service request data further indicating at least one customization parameter; and/or
the robot data is further indicating at least one of a state of charge (SoC) of the at least one guidance robot (31, 32, 216) and specifications of the at least one guidance robot (31, 32, 216) that are required to process a task of the service request data; and/or
the control data is further indicating at least one of a notification for a provider of the service request data and a control request for at least one transportation system, in particular an elevator, on the first route guidance and/or the second route guidance.

4. The computer-implemented method (1000) according to any one of the claims 1 to 3, wherein
the control data is provided to at least one of a first guidance robot (31) and a second guidance robot (32), wherein at least first robot data of the first guidance robot (31) and second robot data of the second guidance robot (32) is received.

5. The computer-implemented method (1000) according to claim 4, wherein
the control data is provided to the first guidance robot (31) and/or the second guidance robot (32) based on the received robot data of each of the guidance robots (31, 32, 216).

6. A first data processing system (10) comprising means for carrying out the computer-implemented method (1000) for providing control data to at least one guidance robot (31, 32, 216) according to any one of the claims 1 to 5, and means for data transmitting and/or receiving.

7. A computer-implemented method (2000) for controlling a guidance robot (31, 32, 216), comprising:
providing robot data (2100) of the guidance robot (31, 32, 216); and
controlling (2200) the guidance robot (31, 32, 216) based on received control data provided by the computer-implemented method according to any one of the claims 1 to 5 and indicative of at least one of the first route guidance and the second route guidance.

8. **The** computer-implemented method (2000) according to claim 7, further comprising:
detecting surrounding-data indicative of at least one of a presence of objects surrounding the guidance robot (31, 32, 216) and a distance between objects surrounding the guidance robot and the guidance robot (31, 32, 216).

9. **The** computer-implemented method (2000) according to claim 7 or 8, wherein
the guidance robot (31, 32, 216) is configured to guide a person; and/or
the controlling (2200) is further based on the surrounding-data.

10. The computer-implemented method (2000) according to claim 9, wherein
the guidance robot (31, 32, 216) is tethered to the person by means of the control data and performs at least one of the first route guidance and the second route guidance at a predefined distance away from the person.

11. The computer-implemented method (2000) according to any one of the claims 7 to 10, wherein
the control data is further indicating a stay signal that controls the guidance robot (31, 32, 216) to stay at its actual location until another guidance robot (31, 32, 216) arrives.

12. A second data processing system (20), comprising means for carrying out the computer-implemented method for controlling a guidance robot (2000) according to any one of the claims 7 to 11 and means for transmitting and/or receiving data.

13. A first computer program product comprising instructions that, when the program is executed by a data processing system comprising means for transmitting and/or receiving data, cause the data processing system to carry out the computer-implemented method for providing control data to at least one guidance robot according to any one of the claims 1 to 5.

14. A second computer program product comprising instructions that, when the program is executed by a data processing system comprising means for transmitting and/or receiving data, cause the data processing system to carry out the computer-implemented method for controlling a guidance robot according to any one of the claims 7 to 11.

15. A computer-readable storage having stored thereon the first computer program product according to claim 13 and/or the second computer program product according to claim 14.
